# EUROPEAN PATENT APPLICATION

(11) **EP 4 822 973 A1**
(43) Date of publication of application: **14.10.2026**
(21) Application number: 25186117.5
(22) Date of filing: 30.06.2025
(51) Int. Cl.: H02M 1/42, H02M 3/156, H02M 3/335

(54) **POWER MANAGEMENT SYSTEM, CONTROL CIRCUIT AND CONTROL METHOD FOR LLC CONVERTER**

(30) Priority: 11.04.2025 CN 202510461736
(71) Applicant: Lite-On Technology (Shanghai) Co., Ltd., Shanghai (CN)
(72) Inventor: CHEN, Biao, Haidian District, Beijing (CN); LI, Yan, Haidian District, Beijing (CN); SONG, Zhan-Fei, Haidian District, Beijing (CN)
(74) Representative: dompatent

(57) **Abstract**

An aspect of the present disclosure features a control module for a LLC converter including a PFC circuit and a LLC circuit. A bulk capacitor is included in the LLC converter between the PFC circuit and the LLC circuit. The control module includes a secondary side controller coupled to an output of the LLC circuit and configured to receive an output current of the LLC circuit. The control module also includes an optical coupling circuit coupled to the secondary side controller. The control module also includes a primary side controller coupled to the optical coupling circuit and the PFC circuit. The secondary side controller generates a PWM signal according to a fluctuation of the output current and outputs the PWM signal to the optical coupling circuit, and the optical coupling circuit converting the PWM signal to an analog signal and outputs the analog signal to the primary side controller.

## Description

### TECHNICAL FIELD

The disclosure relates in general to power management system and control techniques for LLC converter, and more particularly, to control techniques of controlling related electrical parameters between primary side and secondary side by optical coupler.

### BACKGROUND

In current usage scenarios of high power density and high power output power supply units (PSUs), when the output load undergoes a large load variation, such as when the output load is greatly increased due to the setting of electrical data peak processing (EDPP) for the purpose of use, such as load increases from 20% to 170%, since the PFC circuit in the front stage reacts slowly to load variations, the capacitor voltage of the bulk capacitor will continue to drop, such that the resonant current on the primary side of the LLC circuit gradually increases until the cycle-by-cycle protection (CBC protection) is triggered, or the output voltage of the PFC is reduced, which in turn causes the system to detect the under voltage protection (UVP) and shut down the system. Thus, there are needs of technique that can balance the input power and output power of the PFC circuit and stabilize the capacitor voltage of the bulk capacitor according to the fluctuation of the output current.

### SUMMARY

The present disclosure describes techniques of transmitting output current fluctuation information obtained by the secondary side controller to the primary side controller through the optical coupling circuit. When the primary side controller receives the relevant information, it adjusts the input current of the PFC circuit and compensates the bulk capacitor in real time to stabilize its capacitor voltage.

The first aspect of the present disclosure features a control module for a LLC converter including a PFC circuit and a LLC circuit. A bulk capacitor is included in the LLC converter between the PFC circuit and the LLC circuit. The control module includes a secondary side controller coupled to an output of the LLC circuit and configured to receive an output current of the LLC circuit. The control module also includes an optical coupling circuit coupled to the secondary side controller. The control module also includes a primary side controller coupled to the optical coupling circuit and the PFC circuit. The secondary side controller generates a PWM signal according to a fluctuation of the output current and outputs the PWM signal to the optical coupling circuit, and the optical coupling circuit converting the PWM signal to an analog signal and outputs the analog signal to the primary side controller. The primary side controller adjusts an input current of the PFC circuit according to the analog signal for stabilizing a capacitor voltage of the bulk capacitor.

The second aspect of the present disclosure features a control method for a LLC converter including a PFC circuit and a LLC circuit. A bulk capacitor is included in the LLC converter between the PFC circuit and the LLC circuit. The control method including receiving, by a secondary side controller, an output current of the LLC circuit. The control method also includes generating, by the secondary side controller, a PWM signal according to a fluctuation of the output current and outputting the PWM signal to an optical coupling circuit. The control method including converting, by the optical coupling circuit, the PWM signal to an analog signal and outputting the analog signal to a primary side controller. The control method including adjusting, by the primary side controller, an input current of the PFC circuit according to the analog signal for stabilizing a capacitor voltage of the bulk capacitor.

The third aspect of the present disclosure features a power management system. The power management system includes a LLC converter. The LLC converter includes a PFC circuit and a LLC circuit coupled to the PFC circuit. A bulk capacitor is included in the LLC converter between the PFC circuit and the LLC circuit. The power management system also includes a control module. The control module includes a secondary side controller coupled to an output of the LLC circuit and configured to receive an output current of the LLC circuit. The control module also includes an optical coupling circuit coupled to the secondary side controller. The control module also includes a primary side controller coupled to the optical coupling circuit and the PFC circuit. The secondary side controller generates a PWM signal according to a fluctuation of the output current and outputs the PWM signal to the optical coupling circuit, and the optical coupling circuit converting the PWM signal to an analog signal and outputs the analog signal to the primary side controller. The primary side controller adjusts an input current of the PFC circuit according to the analog signal for stabilizing a capacitor voltage of the bulk capacitor.

The details of one or more disclosed implementations are set forth in the accompanying drawings and the description below. Other features, aspects, and advantages will become apparent from the description, the drawings and the claims.

### BRIEF DESCRIPTION OF THE DRAWINGS

FIG. 1 is a function block diagram illustrating a control module for a LLC converter, according to some implementations of the present disclosure.
FIG. 2 is a waveform diagram illustrating the control module controlling the PFC circuit, according to some implementations of the present disclosure.
FIG. 3 is a flowchart illustrating a control process for an LLC converter, according to some implementations of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

The terms "comprise," "comprising," "include," "including," "has," "having," etc. used in this specification are open-ended and mean "comprises but not limited." The terms used in this specification generally have their ordinary meanings in the art and in the specific context where each term is used. The use of examples in this specification, including examples of any terms discussed herein, is illustrative only, and in no way limits the scope and meaning of the disclosure or of any exemplified term. Likewise, the present disclosure is not limited to various embodiments given in this specification.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative embodiments but, like the illustrative embodiments, should not be used to limit the present disclosure. The elements included in the illustrations herein may not be drawn to scale.

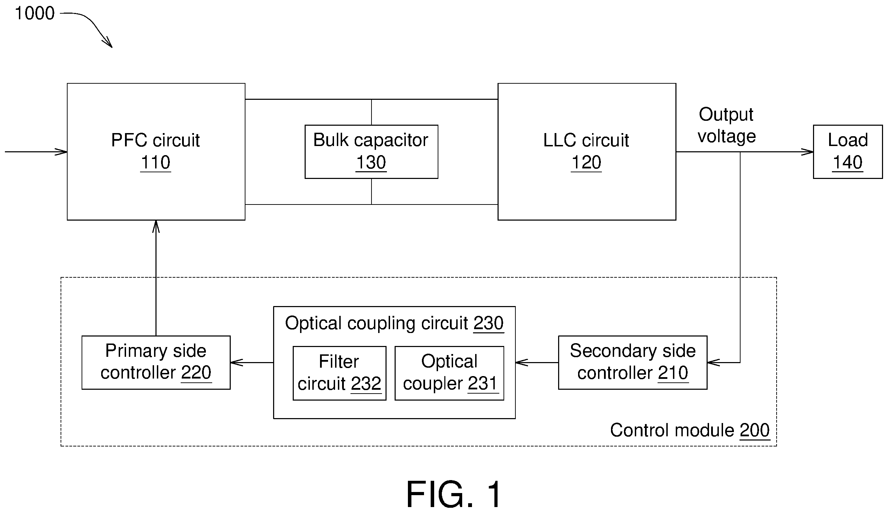

FIG. 1 is a function block diagram illustrating a control module 200 for a LLC converter 1000, according to some implementations of the present disclosure. The LLC converter 1000 includes a PFC circuit 110, a bulk capacitor 130 and a LLC circuit 120. The bulk capacitor 130 is coupled between the PFC circuit 110 and the LLC circuit 120, and the discharging output of the bulk capacitor 130 is related to the output power (or voltage) of the PFC circuit 110. The LLC circuit is coupled to a load 140 for providing output current to the load 140.

The control module 200 includes a secondary side controller 210, an optical coupling circuit 230 and a primary side controller 220. The secondary side controller 210 is coupled to an output of the LLC circuit 120 and configured to receive output current of the LLC circuit 120 and generate respective PWM signal corresponding to the fluctuation of the output current, as shown by FIG. 1. In some implementations, the secondary side controller 210 is a part of the LLC circuit 120, or can be implemented by the original controller of the LLC circuit 120, such as a digital signal processor (DSP) for controlling the LLC circuit 120. The optical coupling circuit 230 includes an optical coupler 231 and a filter circuit 232 coupled to the secondary side controller 210 and the primary side controller 220. The optical coupler 231 can be used to transmit the PWM signal generated by the secondary side controller 210 to the primary side controller 220 through the transmitting and receiving ends of the optical coupler 231. The filter circuit 232 can be used to convert the PWM signal received from the receiving end of the optical coupler 231 into an analog signal and provide the analog signal to the primary side controller 220. The primary side controller 220 is coupled to the optical coupling circuit 230 and the PFC circuit110. When the primary side controller 220 receives the analog signal corresponding to the fluctuation of the output current, the input current of the PFC circuit 110 can be adjusted according to the analog signal, that is, the input power of the PFC circuit 110 is greater than or equal to its output power, that is, (Vᵢₙ*Iᵢₙ) ≥ (Vₒᵤₜ*Iₒᵤₜ)/η, where Vᵢₙ and Iᵢₙ are the input voltage and input current of the PFC circuit 110, Vₒᵤₜ and Iₒᵤₜ are the output voltage and output current of the LLC circuit 120, and η is the conversion efficiency. For example, when the primary side controller 220 receives an analog signal corresponding to a fluctuation (or tare) of the output current, it can quickly adjust the input current of the PFC circuit 110 to increase the input current rapidly. In some implementations, the primary side controller 220 is a part of the PFC circuit 110, or can be implemented by the original controller of the PFC circuit 110, such as a digital signal processor (DSP) for controlling PFC circuit 110. By executing the operations discussed above, the input current of the PFC circuit 110 is adjusted to balance the input/output power, and the capacitor voltage of the bulk capacitor 130 can be kept stable.

Specifically, the secondary side controller 210 can determine whether there is a dynamic load, that is, a large fluctuation, by obtaining the output current of the LLC circuit 120. For example, when the load suddenly increases from 20% to 170% (such as the output current increases by 1.4 to 1.8 times), it can generate a PWM signal to the optical coupling circuit 230 according to the fluctuation of the output current. The PWM signal is transmitted and converted into the analog signal through the optical coupling circuit 230. The primary side controller 220 can read the analog signal to obtain the load fluctuation (or variation value) of the output current. The primary side controller 220 can calculate a variation of the output power of the LLC circuit 120 based on this variation value, and then calculate the variation required for the corresponding input current, so that the integral value of the PFC circuit 110 (for example, through a proportional integral (PI) controller) is added by a respective value to balance the input/output power, to prevent the capacitor voltage of the bulk capacitor 130 from falling under the lower limit, ensuring that the capacitor voltage fluctuation range is controlled within a certain range, thereby stabilizing the output voltage.

In some implementations, when the primary side controller 220 increases the input current of the PFC circuit 110 and increases the capacitor voltage of the bulk capacitor 130, and if the capacitor voltage is greater than an upper limit, such as greater than 435V, the primary side controller 220 turns off the input current of the PFC circuit 110 until the capacitor voltage of the bulk capacitor 130 drops lower than a lower limit, such as lower than 415V, and then turns on the input current of the PFC circuit 110, which ensures that the capacitor voltage of the bulk capacitor 130 does not exceed the upper limit of the withstand voltage of the large-capacity capacitor 130.

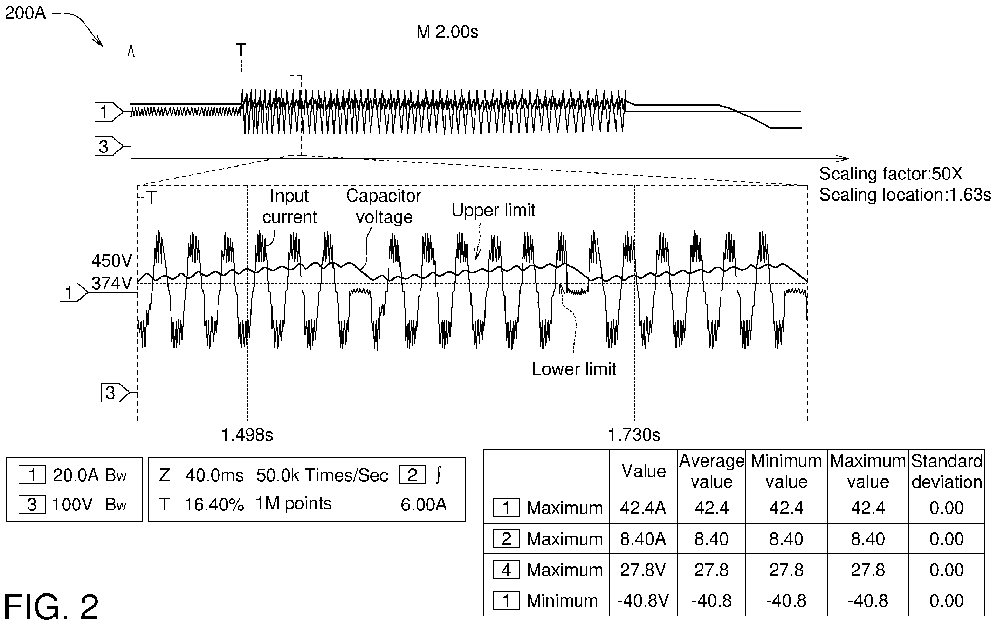

FIG. 2 is a waveform diagram illustrating the control module controlling the PFC circuit, according to some implementations of the present disclosure. By executing the operations discussed above, as shown in the waveform diagram 200A, by adjusting the input current of the PFC circuit (corresponding to the fluctuation of the output current of the LLC circuit), the capacitor voltage of the bulk capacitor between the PFC circuit and the LLC circuit can be controlled between 470V and 390V, that is, the fluctuation range of the capacitor voltage is controlled to be stable within a certain range, so that the overall output voltage of the system can be stabilized, and the CBC protection will not be triggered due to the instantaneous large fluctuation of the output current due to the EDPP.

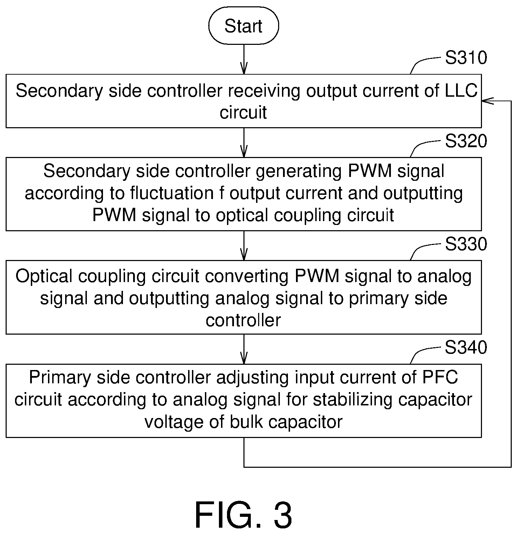

FIG. 3 is a flowchart illustrating a control procedure for an LLC converter, according to some implementations of the present disclosure. In step S310, a secondary side controller (such as the secondary-side controller 210 of FIG. 1) receives an output current of an LLC circuit (such as the LLC circuit 120 of FIG. 1).

In step S320, the secondary side controller generates a PWM signal according to a fluctuation of the output current and outputs the PWM signal to an optical coupling circuit (such as the optical coupling circuit 230 of FIG. 1).

In step S330, the optical coupling circuit converts the PWM signal into an analog signal and transmits the analog signal to a primary side controller (such as the primary-side controller 220 of FIG. 1).

In step S340, the primary side controller adjusts the input current of the PFC circuit (such as the PFC circuit 110 of FIG. 1) according to the analog signal to stabilize a capacitor voltage of a bulk capacitor (such as the bulk capacitor 130 of FIG. 1). Then, the process returns to step S310 to continue receiving the output current of the LLC circuit, so as to keep the capacitor voltage stable.

In certain configurations, the optical coupling circuit comprises an optical coupler and a filter circuit. The optical coupler is configured to transmit the PWM signal, and the filter circuit is configured to convert the PWM signal into the analog signal.

In certain configurations, the primary side controller adjusting the input current of the PFC circuit according to the analog signal comprises: calculating a variation of an output power of the LLC circuit according to the fluctuation of the output current corresponding to the analog signal; and calculating a variation of the input current according to the variation of the output power, and adjusting the input current such that an input power of the PFC circuit is greater than or equal to the output power. The input power is the product of an input voltage and the input current of the PFC circuit.

In certain configurations, the output power is corresponding to the fluctuation of the output current. The output current is increased by 1.4 to 1.8 times.

In certain configurations, the secondary side controller generates the PWM signal for transmitting to the optical coupling circuit according to the fluctuation of the output current which is increased by 1.4 to 1.8 times.

In certain configurations, the primary side controller calculates the variation of the output power of the LLC circuit according to the output current increased by 1.4 to 1.8 times, and calculates a variation needed by the input current of the PFC circuit such that the PFC circuit adds a respective value based on an integral value of a PI controller to the input current.

In certain configurations, when the primary side controller increases the input current of the PFC circuit, causing the capacitor voltage of the bulk capacitor to increase, and if the capacitor voltage is greater than an upper limit, the primary side controller turns off the input current of the PFC circuit until the capacitor voltage drops below a lower limit, and then turns on the input current of the PFC circuit.

The processes and logic flows described in this document can be performed by one or more programmable processors executing one or more computer programs to perform the functions described herein. The processes and logic flows can also be performed by, and apparatus can also be implemented as, special purpose logic circuitry, e.g., an FPGA (field programmable gate array) or an ASIC (application specific integrated circuit).

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed for execution on one computer or on multiple computers that are located at one site or distributed across multiple sites and interconnected by a communications network.

The processes and logic flows described in this document can be performed by one or more programmable processors executing one or more computer programs to perform the functions described herein. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer can include a processor for performing instructions and one or more memory devices for storing instructions and data. Generally, a computer can also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data can include all forms of nonvolatile memory, media and memory devices, including by way of example semiconductor memory devices, e.g., EPROM, EEPROM, and flash memory devices; magnetic disks. The processor and the memory can be supplemented by, or incorporated in, special purpose logic circuitry.

While this document may describe many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A control module (200), for a LLC converter (1000) comprising a PFC circuit (110) and a LLC circuit (120), wherein a bulk capacitor (130) is included in the LLC converter (1000) between the PFC circuit (110) and the LLC circuit (120), the control module (200) comprising:
a secondary side controller (210) coupled to an output of the LLC circuit (120) and configured to receive an output current of the LLC circuit (120);
an optical coupling circuit (230) coupled to the secondary side controller (210);
a primary side controller (220) coupled to the optical coupling circuit (230) and the PFC circuit (110),
wherein the secondary side controller (210) generates a PWM signal according to a fluctuation of the output current and outputs the PWM signal to the optical coupling circuit (230), and the optical coupling circuit (230) converting the PWM signal to an analog signal and outputs the analog signal to the primary side controller (220),
wherein the primary side controller (220) adjusts an input current of the PFC circuit (110) according to the analog signal for stabilizing a capacitor voltage of the bulk capacitor (130).

2. The control module (200) according to claim 1, wherein the optical coupling circuit comprises an optical coupler (231) and a filter circuit (232),
wherein the optical coupler (231) is configured to transmit the PWM signal, and the filter circuit (232) is configured to convert the PWM signal into the analog signal.

3. The control module (200) according to claim 1, wherein the primary side controller (220) adjusting the input current of the PFC circuit (110) according to the analog signal comprises:
calculating a variation of an output power of the LLC circuit (120) according to the fluctuation of the output current corresponding to the analog signal; and
calculating a variation of the input current according to the variation of the output power, and adjusting the input current such that an input power of the PFC circuit (110) is greater than or equal to the output power,
wherein the input power is the product of an input voltage and the input current of the PFC circuit (110).

4. The control module (200) according to claims 1 or 3, wherein the output power is corresponding to the fluctuation of the output current, wherein the output current is increased by 1.4 to 1.8 times.

5. The control module (200) according to any of claims 1, 3 or 4, wherein the secondary side controller (210) generates the PWM signal for transmitting to the optical coupling circuit (230) according to the fluctuation of the output current which is increased by 1.4 to 1.8 times.

6. The control module according to any of claims 1, 3 or 4, wherein the primary side controller (220) calculates the variation of the output power of the LLC circuit (120) according to the output current increased by 1.4 to 1.8 times, and calculates a variation needed by the input current of the PFC circuit (110) such that the PFC circuit (110) adds a respective value based on an integral value of a PI controller to the input current.

7. The control module (200) according to any of claims 1, 3 or 4, wherein when the primary side controller (220) increases the input current of the PFC circuit (110), causing the capacitor voltage of the bulk capacitor (130) to increase, and if the capacitor voltage is greater than an upper limit, the primary side controller (220) turns off the input current of the PFC circuit (110) until the capacitor voltage drops below a lower limit, and then turns on the input current of the PFC circuit (110).

8. A power management system, comprising:
a LLC converter (1000) comprising:
a PFC circuit (110); and
a LLC circuit (120), coupled to the PFC circuit (110), wherein a bulk capacitor (130) is included in the LLC converter (1000) between the PFC circuit (110) and the LLC circuit (120);
a control module of any one of claims 1 to 7.

9. A control method, for a LLC converter (1000) comprising a PFC circuit (110) and a LLC circuit (120), wherein a bulk capacitor (130) is included in the LLC converter (1000) between the PFC circuit (110) and the LLC circuit (120), the control method comprising:
receiving, by a secondary side controller (210), an output current of the LLC circuit (120);
generating, by the secondary side controller (210), a PWM signal according to a fluctuation of the output current and outputting the PWM signal to an optical coupling circuit (230);
converting, by the optical coupling circuit (230), the PWM signal to an analog signal and outputting the analog signal to a primary side controller (220); and
adjusting, by the primary side controller (220), an input current of the PFC circuit (110) according to the analog signal for stabilizing a capacitor voltage of the bulk capacitor (130).

10. The control method according to claim 9, wherein the optical coupling circuit (230) comprises an optical coupler (231) and a filter circuit (232),
wherein the optical coupler (231) is configured to transmit the PWM signal, and the filter circuit (232) is configured to convert the PWM signal into the analog signal.

11. The control method according to claim 9, wherein the primary side controller (220) adjusting the input current of the PFC circuit (110) according to the analog signal comprises:
calculating a variation of an output power of the LLC circuit (120) according to the fluctuation of the output current corresponding to the analog signal; and
calculating a variation of the input current according to the variation of the output power, and adjusting the input current such that an input power of the PFC circuit (110) is greater than or equal to the output power,
wherein the input power is the product of an input voltage and the input current of the PFC circuit (110).

12. The control method according to claims 9 or 11, wherein the output power is corresponding to the fluctuation of the output current, wherein the output current is increased by 1.4 to 1.8 times.

13. The control method according to any of claims 9, 11 or 12, wherein the secondary side controller (210) generates the PWM signal for transmitting to the optical coupling circuit according to the fluctuation of the output current which is increased by 1.4 to 1.8 times.

14. The control method according to any of claims 9, 11 or 12, wherein the primary side controller (220) calculates the variation of the output power of the LLC circuit (120) according to the output current increased by 1.4 to 1.8 times, and calculates a variation needed by the input current of the PFC circuit (110) such that the PFC circuit (110) adds a respective value based on an integral value of a PI controller to the input current.

15. The control method according to any of claims 9, 11 or 12, wherein the primary side controller (220) adjusting the input current of the PFC circuit (110) comprises:
when the primary side controller increases the input current of the PFC circuit (110), causing the capacitor voltage of the bulk capacitor (130) to increase, and if the capacitor voltage is greater than an upper limit, the primary side controller (220) turns off the input current of the PFC circuit (110); or
when the primary side controller (220) turns off the input current of the PFC circuit (110), causing the capacitor voltage of the bulk capacitor (130) to decrease lower than a lower limit, the primary side controller (220) turns on the input current of the PFC circuit (110).

16. The control method according to any of claims 9, 11 or 12, wherein the primary side controller (110) adjusting the input current of the PFC circuit (110) comprises:
when the primary side controller (220) turns off the input current of the PFC circuit (110), causing the capacitor voltage of the bulk capacitor (130) to decrease lower than a lower limit, the primary side controller (220) turns on the input current of the PFC circuit (110).
